(19) Europäisches Patentamt
European Patent Office
Office européen des brevets

(11) Veröffentlichungsnummer: **0 023 646**
**B1**

# (12) EUROPÄISCHE PATENTSCHRIFT

(45) Veröffentlichungstag der Patentschrift:
**15.02.84**

(51) Int. Cl.³: **C 08 J 9/34**, C 09 D 3/72,
C 08 G 18/14, B 60 G 13/00

(21) Anmeldenummer: **80104228.4**

(22) Anmeldetag: **18.07.80**

(54) **Oberflächenversiegelte Formkörper aus zelligen Polyurethan-Elastomeren, ein Verfahren zu ihrer Herstellung und ihre Verwendung.**

(30) Priorität: **02.08.79 DE 2931469**

(43) Veröffentlichungstag der Anmeldung:
**11.02.81 Patentblatt 81/6**

(45) Bekanntmachung des Hinweises auf die Patenterteilung:
**15.02.84 Patentblatt 84/7**

(84) Benannte Vertragsstaaten:
**DE FR GB IT NL SE**

(56) Entgegenhaltungen:
**CH - A - 431 048**
**DE - A - 1 779 871**
**DE - A - 2 261 768**
**DE - A - 2 320 938**
**DE - A - 2 444 405**
**US - A - 3 752 695**

(73) Patentinhaber: **BAYER AG, Zentralbereich Patente, Marken und Lizenzen, D-5090 Leverkusen 1, Bayerwerk (DE)**

(72) Erfinder: **Hoppe, Hans-Georg, Kurlandweg 31, D-5653 Leichlingen (DE)**
Erfinder: **Henrichs, Paul, Gierather Wald 43, D-5060 Bergisch-Gladbach (DE)**

**EP 0 023 646 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Oberflächenversiegelte Formkörper aus zelligen Polyurethan-Elastomeren, ein Verfahren zu ihrer Herstellung und ihre Verwendung

Die Erfindung betrifft die Versiegelung weitgehend offenzelliger, in Formen geschäumter Polyurethan-Elastomerer mittels einer dünnen, nichtporösen, luftundurchlässigen Oberflächenhaut aus Polyurethan oder Polyurethanharnstoff und ihre Verwendung als Federungselemente, Anschlagpuffer und Dichtungen.

Durch die Oberflächenversiegelung wird verhindert, dass Wasser, Staub und Schmutz in das zellige Polyurethan-Elastomer eindringen können, überraschenderweise ohne dass dessen physikalische Eigenschaften, wie beispielsweise das Federungsverhalten, verändert werden.

Formkörper aus zelligen Polyurethan-Elastomeren werden technisch in an sich bekannter Weise aus Polyisocyanaten, höhermolekularen Polyhydroxylverbindungen, Wasser als Kettenverlängerungs- und Treibmittel und gegebenenfalls zusätzlichen Kettenverlängerungsmitteln aufgebaut. Von den Polyurethan-Schaumstoffen unterscheiden sich zellige Polyurethan-Elastomere durch wesentlich höhere Raumgewichte (ca. 0,3 bis 0,8 g/$cm^3$), bessere physikalische Eigenschaften und die dadurch bedingten technischen Anwendungsmöglichkeiten. Besonders hochwertige zellige Polyurethan-Elastomere, wie beispielsweise ein aus 1,5-Naphthylendiisocyanat, einem linearen Ethandiol-Polyadipat (Molekulargewicht ca. 2000) und Wasser hergestelltes Produkt, werden grosstechnisch u.a. als Puffer und Dämpfungsmaterial eingesetzt.

Ein grosses Anwendungsgebiet besteht in der Kraftfahrzeugindustrie, wo derartige Werkstoffe in erster Linie als Dämpfungs- und Anschlagpuffer eingesetzt werden. Insbesondere bei Federbeinkonstruktionen ist es vorteilhaft, die aus Gummi hergestellten Zusatzfedern durch solche aus zelligen Polyurethan-Elastomeren zu ersetzen, da sich diese von elastischen Kompaktmaterialien durch eine wesentlich höhere Verformbarkeit unterscheiden. Verformungen bis zu 80% sind in der Praxis (z.B. Zusatzfedern bei Automobilen) durchaus möglich.

Die aus zelligen Polyurethan-Elastomeren hergestellten Federungselemente werden bei Automobilen innerhalb der Gesamtfederbeinkonstruktion, bestehend aus Stossdämpfer, Spiralfeder und dem Puffer aus zelligem Elastomer, auf die Kolbenstange des Stossdämpfers geschoben. Bei dieser Art der Anordnung besteht nun häufig die Gefahr der Verschmutzung der Puffer, da in die Dämpfungspuffer aufgrund ihrer überwiegend offenzelligen Porenstruktur Spritzwasser und Staub eindringen können. Vor allem bei tiefen Temperaturen kann dadurch das Federungsverhalten verändert werden; abgesehen davon werden infolge des Einflusses von Wasser und Schmutz auch vorzeitige Korrosions- und Abrieberscheinungen auf der Kolbenstange des Stossdämpfers beobachtet.

Aufgabe der vorliegenden Erfindung war es somit, Federungselemente zur Verfügung zu stellen, die unter Beibehaltung der bisher üblichen Rezepturen und mittels der in der Praxis üblichen Verarbeitungseinrichtungen hergestellt werden können und nicht nur die bekannten guten Federungseigenschaften aufweisen, sondern auch wasserdicht sind.

Es wurde nun gefunden, dass man die genannten Ziele erreichen kann, wenn man die bekannten Puffer aus elastomerem zelligem Polyurethan mit einer dichten, undurchlässigen Haut aus Polyurethan oder Polyurethan-Harnstoff versieht.

Von den Integralschaumstoffen unterscheiden sich zellige Polyurethan-Elastomere dadurch, dass sie eine über den gesamten Querschnitt praktisch gleichmässige Dichte aufweisen. Durch Erniedrigung der Formtemperatur lässt sich zwar eine dichtere Aussenschicht erzielen; diese beeinträchtigt jedoch in negativer Weise das Federungsverhalten, die Gleichmässigkeit der Artikel und bietet ausserdem keinen sicheren Schutz gegen eindringende Feuchtigkeit und Schmutzpartikel, da sie nicht vollständig porenfrei ist.

Man musste nun annehmen, dass auch durch eine getrennt hergestellte, dichte Oberflächenhaut des Puffers das Federungsverhalten verändert wird, insbesondere da durch eine undurchlässige Haut, die infolge der Offenporigkeit der Zellstruktur zunächst bestehende Atmungsmöglichkeit beim Einfedern des Schaumes unterbunden wird.

Überraschenderweise wurde jedoch gefunden, dass durch eine solche Aussenhaut das Federungsverhalten des Puffers nicht verändert wird.

Entsprechend dem Stand der Technik waren die erfindungsgemässen Formkörper nicht bekannt. So beschreibt die DE-OS 2 444 405 die Beschichtung von Schaumstoffkörpern (z.B. für Spielzeug), insbesondere auf offenporigen Schaumstoffen, mit Einstrich- oder Zweistrichkomponenten-Beschichtungslösungen auf Basis organischer Lösungsmittel unter Auftrag mittels Spritzpistolen.

US-PS 3 752 695 betrifft Integralschaumstoffe mit fester Haut, die gegebenenfalls mit einer dünnen, nicht verfärbenden Oberflächenlackierung versehen werden. Integralschaumstoffe sind laut Beschreibung jedoch ungeeignete Materialien für die erfindungsgemässe Verwendung.

US-PS 3 795 722 beschreibt die Herstellung von Schaumstoffformteilen mit einer Aussenschicht mit mindestens einem Saum. Dabei wird die Aussenschicht durch Aufsprühen von NCO-Prepolymer-/Aminhärtergemischen hergestellt und dann wird die Form in die Form geschäumt.

US-PS 3 605 848 beschreibt schusssichere, mikrozelluläre Urethanelastomere der Dichte 0,096 bis 0,40 g/$cm^3$ enthaltende Reifen, die einen mikrozellulären Urethanelastomerkern und entsprechende Kautschuk- oder Urethanelastomere als Reifendeckschicht enthalten. Es handelt sich um relativ dicke Aussenschichten, wobei der Erfindungszweck die Anwendung als schusssichere Reifenfüllung anstrebt.

In US-PS 3 487 134 sprüht man NCO-Prepolymer-Lösungen (reaktive Mischungen) in Formen und schäumt dann in üblicher Schaumstofftechnik.

In US-PS 4 242 410 bildet man zunächst aus NCO-Prepolymeren mit aliphatischen Diisocyanaten und wässrigen Lösungen von Bis-Ketimin-Härtern, einen lichtstabilen Überzug in einer Form, lässt zum Überzug reagieren und füllt dann die Form mit einer schaumfähigen Mischung.

Gegenstand der Erfindung sind somit Formkörper aus einem zumindest teilweise offenzelligen Polyurethanelastomeren mit einer Oberflächenhaut, dadurch gekennzeichnet, dass sie auf der Basis höhermolekularer, 2 bis 3 Hydroxylgruppen aufweisender Verbindungen vom Molekulargewicht 800–4000, 1,5-Naphthylendiisocyanat und Wasser, in einer Isocyanatkennzahl von 100 bis 115, mit einem weitgehend homogenen Dichteprofil und einem Raumgewicht von 0,3 bis 0,8 g/cm³ und einer dichten, nicht porösen Haut aus ionischem, emulgatorfreiem Polyurethan oder Polyurethanharnstoff mit einer Dicke von 0,05 bis 1 mm als Versiegelung bestehen.

Gegenstand der Erfindung ist auch ein Verfahren zur Herstellung der erfindungsgemässen, an der Oberfläche versiegelten Formkörper, welches dadurch gekennzeichnet ist, dass man entweder

a) den aus einem zumindest teilweise offenzelligen Polyurethan-Elastomeren mit einem weitgehend homogenen Dichteprofil und einem Raumgewicht von 0,3 bis 0,8 g/cm³ bestehenden Formkörper durch Tauchen oder Besprühen mit einer wässrigen Polyurethanlösung oder -dispersion unter anschliessender Trocknung mit einer dichten Haut versieht oder vorzugsweise

b) die Innenseite einer verschliessbaren Form durch Besprühen mit einer wässrigen Polyurethanlösung oder -dispersion beschichtet und die so erhaltene Beschichtung zu einer dichten Haut trocknen lässt und anschliessend in der so vorbehandelten Form den Formkörper mit einem weitgehend homogenen Dichteprofil und einem Raumgewicht von 0,3 bis 0,8 g/cm³ herstellt, indem man in die Form ein Reaktionsgemisch aus

(i) höhermolekularen, 2–3 Hydroxylgruppen aufweisenden Verbindungen mit einem Molekulargewicht von 800 bis 4000 und 1,5-Naphthylendiisocyanat oder aus diesen Komponenten hergestellten NCO-Prepolymeren,

(ii) Wasser und gegebenenfalls

(iii) organischen Kettenverlängerungsmitteln, sowie gegebenenfalls weiteren in der Polyurethanchemie an sich bekannten Hilfs- und Zusatzmitteln

einfüllt, wobei man die Mengenverhältnisse der Reaktionspartner so wählt, dass eine Isocyanat-Kennzahl von 100 bis 115 vorliegt, und wobei man die Gesamtmenge des in die Form eingefüllten Reaktionsgemischs so wählt, dass ein Raumgewicht des Formkörpers von 0,3 bis 0,8 g/cm³ resultiert und anschliessend nach Schliessen der Form das Reaktionsgemisch im Temperaturbereich von 60 bis 100°C ausreagieren lässt.

Für die Herstellung der Federungselemente aus geschäumten PUR-Elastomeren wird Naphthylen-1,5-diisocyanat als Polyisocyanat eingesetzt.

Als höhermolekulare Polyhydroxylverbindungen werden durchschnittlich 2 bis 3 Hydroxylgruppen aufweisende Verbindungen vom Molekulargewicht 800 bis 4000 eingesetzt, z. B. Polyester, Polyether, Polythioether, Polyacetale, Polycarbonate und Polyesteramide, wie sie für die Herstellung von homogenen und von zellförmigen Polyurethanen an sich bekannt sind.

Die in Frage kommenden Hydroxylgruppen aufweisenden Polyester sind z. B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein.

Als Beispiele für solche Carbonsäuren und deren Derivate seien genannt:
Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure; Terephthalsäuredimethylester und Terephthalsäure-bis-glykolester. Als mehrwertige Alkohole kommen z. B. Äthylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Formit, Methylglykosid, ferner Diäthylentlykol, Triäthylenglykol, Tetraäthylenglykol und höhere Polyäthylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z. B. ε-Caprolacton, oder aus Hydroxycarbonsäuren, z. B. ω-Hydroxycapronsäure, sind einsetzbar.

Auch die in Frage kommenden, mindestens zwei, in der Regel zwei bis acht, vorzugsweise zwei bis drei, Hydroxylgruppen aufweisenden Polyäther sind solche der an sich bekannten Art und werden z. B. durch Polymerisation von Epoxiden wie Äthylenoxid, Propylenoxid, Butylenoxid, Tetrahydrofuran, Styroloxid oder Epichlorhydrin mit sich selbst, z. B. in Gegenwart von Lewis-Katalysatoren wie $BF_3$, oder durch Anlagerung dieser Epoxide, vorzugsweise von Äthylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z.B. Äthylenglykol, Propylenglykol-(1,3) oder -(1,2), Trimethylolpropan, Glycerin, Sorbit, 4,4'-Dihydroxy-diphenylpropan, Anilin, Äthanolamin oder Äthylendiamin hergestellt. Auch Sucrosepolyäther, wie sie z.B. in den DE-Auslegeschriften 1 176 358 und 1 064 938 beschrieben werden, sowie auf Formit oder Formose gestartete Polyäther (DE-Offenlegungsschrift 2 639 083 bzw. 2 737 951), kommen erfindungsgemäss in Frage. Vielfach sind solche Polyäther bevorzugt, die überwiegend (bis zu 90 Gew.-%, bezogen auf alle vorhandenen OH-Gruppen im Polyäther) primäre OH-Gruppen aufweisen. Auch OH-Gruppen aufweisende Polybutadiene sind erfindungsgemäss geeignet.

Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten z.B. um Polythiomischäther, Polythioätherester oder Polythioätheresteramide.

Als Polyacetale kommen z.B. die aus Glykolen, wie Diäthylenglykol, Triäthylenglykol, 4,4'-Dioxäthoxydiphenyldimethylmethan, Hexandiol und Formaldehyd herstellbaren Verbindungen in Frage. Auch durch Polymerisation cyclischer Acetale wie z.B. Trioxan (DE-Offenlegungsschrift 1 694 128) lassen sich erfindungsgemäss geeignete Polyacetale herstellen.

Als Hydroxylgruppen aufweisende Polycarbonate kommen solche der an sich bekannten Art in Betracht, die z.B. durch Umsetzung von Diolen wie Propandiol-(1,3), Butandiol-(1,4) und/oder Hexandiol-(1,6), Diäthylenglykol, Triäthylenglykol, Tetraäthylenglykol oder Thiodiglykol mit Diarylcarbonaten, z.B. Diphenylcarbonat, oder Phosgen hergestellt werden können (DE-Auslegeschriften 1 694 080, 1 915 908 und 2 221 751; DE-Offenlegungsschrift 2 605 024).

Zu den Polyesteramiden und Polyamiden zählen z.B. die aus mehrwertigen gesättigten oder ungesättigten Carbonsäuren bzw. deren Anhydriden und mehrwertigen gesättigten oder ungesättigten Aminoalkoholen, Diaminen, Polyaminen und deren Mischungen gewonnenen, vorwiegend linearen Kondensate.

Auch bereits Urethan- oder Harnstoffgruppen enthaltende Polyhydroxylverbindungen sowie gegebenenfalls modifizierte natürliche Polyole, wie Rizinusöl oder Kohlenhydrate, z.B. Stärke, sind verwendbar.

Die genannten Polyhydroxylverbindungen können vor ihrer Verwendung bei der Herstellung der zelligen Elastomere noch in der verschiedensten Weise modifiziert werden. So lässt sich gemäss DE-Offenlegungsschriften 2 210 839 (US-Patentschrift 3 849 515) und 2 544 195 ein Gemisch aus verschiedenen Polyhydroxylverbindungen (z.B. aus einem Polyäther- und einem Polyesterpolyol) durch Verätherung in Gegenwart einer starken Säure zu einem höhermolekularen Polyol kondensieren, welches aus über Ätherbrücken verbundenen verschiedenen Segmenten aufgebaut ist. Es ist auch möglich, z.B. gemäss DE-Offenlegungsschrift 2 559 372 in die Polyhydroxylverbindungen Amidgruppen oder gemäss DE-Offenlegungsschrift 2 620 487 durch Umsetzung mit polyfunktonellen Cyansäureestern Triazingruppen einzuführen. Durch Umsetzung eines Polyols mit einer weniger als äquivalenten Menge eines Diisocyanatocarbodiimids und anschliessende Reaktion der Carbodiimidgruppe mit einem Amin, Amid, Phosphit oder einer Carbonsäure erhält man Guanidin-, Phosphonoformamidin- bzw. Acylharnstoffgruppen aufweisende Polyhydroxylverbindungen (DE-Offenlegungsschriften 2 714 289, 2 714 292 und 2 714 293). Von besonderem Interesse ist es in manchen Fällen, die höhermolekularen Polyhydroxylverbindungen durch Reaktion mit Isatosäureanhydrid vollständig oder teilweise in die entsprechenden Anthranilsäureester überzuführen, wie es in den DE-Offenlegungsschriften 2 019 432 und 2 619 840 bzw. den US-Patentschriften 3 808 250, 3 975 428 und 4 016 143 beschrieben ist. Man erhält auf diese Weise höhermolekulare Verbindungen mit endständigen aromatischen Aminogruppen.

Es können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z.B. erhalten, wenn man Polyadditionsreaktionen (z.B. Umsetzungen zwischen Polyisocyanaten und aminofunktionellen Verbindungen) bzw. Polykondensationsreaktionen (z.B. zwischen Formaldehyd und Phenolen und/oder Aminen) in situ in den oben genannten, Hydroxylgruppen aufweisenden Verbindungen ablaufen lässt. Derartige Verfahren sind beispielsweise in den DE-Auslegeschriften 1 168 075 und 1 260 142, sowie den DE-Offenlegungsschriften 2 324 134, 2 423 984, 2 512 385, 2 513 815, 2 550 796, 2 550 797, 2 550 833, 2 550 862, 2 633 293 und 2 639 254 beschrieben. Es ist aber auch möglich, gemäss US-Patentschrift 3 869 413 bzw. DE-Offenlegungsschrift 2 550 860 eine fertige wässrige Polymerdispersion mit einer Polyhydroxylverbindung zu vermischen und anschliessend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyäthern (US-Patentschriften 3 383 351, 3 304 273, 3 523 093, 3 110 695; DE-Auslegeschrift 1 152 536) oder Polycarbonatpolyolen (DE-Patentschrift 1 769 795; US-Patentschrift 3 637 909) erhalten werden, sind für die Herstellung der Formkörper geeignet. Bei Verwendung von Polyetherpolyolen, welche gemäss den DE-Offenlegungsschriften 2 442 101, 2 644 922 und 2 646 141 durch Pfropfpolymerisation mit Vinylphosphonsäureestern sowie gegebenenfalls (Meth)acrylnitril, (Meth)acrylamid oder OH-funktionellen (Meth)acrylsäureestern modifiziert wurden, erhält

man Kunststoffe von besonderer Flammwidrigkeit.

Bei der Verwendung von modifizierten Polyhydroxylverbindungen der oben genannten Art als Ausgangskomponente im Polyisocyanat-Polyadditionsverfahren entstehen in vielen Fällen Polyurethankunststoffe mit wesentlich verbesserten mechanischen Eigenschaften.

Vertreter der genannten erfindungsgemäss zu verwendenden Verbindungen sind z.B. in High Polymers, Vol. XVI, «Polyurethanes, Chemistry and Technology», verfasst von Saunders-Frisch, Interscience Publishers, New York, London, Band I, 1962, Seiten 32–42 und Seiten 44–54 und Band II, 1964, Seiten 5–6 und 198–199, sowie im Kunststoff-Handbuch, Band VII, Vieweg-Höchtlen, Carl-Hanser-Verlag, München, 1966, z.B. auf den Seiten 45–71, beschrieben. Selbstverständlich können Mischungen der obengenannten Polyole, z.B. Mischungen von Polyethern und Polyestern, eingesetzt werden.

Die gegebenenfalls mitzuverwendenden Kettenverlängerungsmittel sind Verbindungen mit mindestens zwei gegenüber Isocyanaten reaktionsfähigen Wasserstoffatomen und einem Molekulargewicht von 32 bis 400.

Auch in diesem Fall können Mischungen von verschiedenen Verbindungen mit mindestens zwei gegenüber Isocyanaten reaktionsfähigen Wasserstoffatomen mit einem Molekulargewicht von 32 bis 400 verwendet werden.

Als Beispiele für derartige Verbindungen seien genannt:
Äthylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-Patentschrift 3 723 392), Glyzerin, Trimethylolpropan, Hexantriol-(1,2,6), Trimethyloläthan, Pentaerythrit, Chinit, Mannit und Sorbit, Ricinusöl, Diäthylenglykol, Triäthylenglykol, Tetraäthylenglykol, höhere Polyäthylenglykole mit einem Molekulargewicht bis 400, Dipropylenglykol, höhere Polypropylenglykole mit einem Molekulargewicht bis 400, Dibutylenglykol, höhere Polybutylenglykole mit einem Molekulargewicht bis 400, 4,4'-Dihydroxy-diphenylpropan, Di-hydroxymethyl-hydrochinon, Ethanolamin, Diethanolamin, N-Methyldiethanolamin und Triethanolamin.

Als niedermolekulare Polyole kommen auch die Gemische von Hydroxyaldehyden und Hydroxyketonen («Formose») bzw. die hieraus durch Reduktion erhaltenen mehrwertigen Alkohole («Formit») in Frage, wie sie bei der Selbstkondensation von Formaldehydhydrat in Gegenwart von Metallverbindungen als Katalysator und von zur Endiolbildung befähigten Verbindungen als Co-Katalysator entstehen (DE-Offenlegungsschriften 3 639 084, 2 714 084, 2 714 104, 2 721 186, 2 738 154 und 2 738 512). Um Kunststoffe mit verbesserter Flammwidrigkeit zu erhalten, setzt man diese Formosen mit Vorteil in Kombination mit Aminoplastbildnern und/oder Phosphiten ein (DE-Offenlegungsschriften 2 738 513 und 2 738 532). Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen als Polyolkomponente in Betracht (DE-Offenlegungsschrift 2 638 759).

Als Vernetzer geeignete aliphatische Diamine sind beispielsweise Äthylendiamin, 1,4-Tetramethylendiamin, 1,11-Undecamethylendiamin, 1,12-Dodecamethylendiamin sowie deren Gemische, 1-Amino-3,3,5-trimethyl-5-aminomethylcyclohexan («Isophorondiamin»), 2,4- und 2,6-Hexahydrotoluylendiamin sowie deren Gemische, Perhydro-2,4'- und 4,4'-diaminodiphenylmethan, p-Xylylendiamin, Bis-(3-aminopropyl)-methylamin, Diamino-perhydroanthrazene (DE-Offenlegungsschrift 3 638 731) und cycloaliphatische Triamine gemäss DE-Offenlegungsschrift 2 614 244. Auch Hydrazin und substituierte Hydrazine, z.B. Methylhydrazin, N,N'-Dimethylhydrazin und deren Homologe sowie Säuredihydrazide kommen erfindungsgemäss in Betracht, z.B. Carbodihydrazid, Oxalsäuredihydrazid, die Dihydrazide von Malonsäure, Bernsteinsäure, Glutarsäure, Adipinsäure, β-Methylaidpinsäure, Sebazinsäure, Hydracrylsäure und Terephthalsäure; Semicarbazido-alkylen-hydrazide wie z.B. β-Semicarbazidopropionsäurehydrazid (DE-Offenlegungsschrift 1 770 591), Semicarbazido-alkylencarbazinester wie z.B. 2-Semicarbazidoäthyl-carbazinester (DE-Offenlegungsschrift 1 918 504) oder auch Aminosemicarbazid-Verbindungen wie z.B. β-Aminoäthyl-semicarbazido-carbonat (DE-Offenlegungsschrift 1 902 931). Zur Steuerung ihrer Reaktivität können die Aminogruppen ganz oder teilweise durch Aldimin- bzw. Ketimin-Gruppen blockiert sein (US-Patentschrift 3 734 894; DE-Offenlegungsschrift 2 637 115).

Als Beispiele für aromatische Diamine seien Bisanthranilsäureester gemäss den DE-Offenlegungsschriften 2 040 644 und 2 160 590, 3,5- und 2,4-Diaminobenzoesäureester gemäss DE-Offenlegungsschrift 2 025 900, die in den DE-Offenlegungsschriften 1 803 635 (US-Patentschriften 3 681 290 und 3 736 350), 2 040 650 und 2 160 589 beschriebenen estergruppenhaltigen Diamine, die Äthergruppen aufweisenden Diamine gemäss DE-Offenlegungsschriften 1 770 525 und 1 809 172 (US-Patentschriften 3 654 364 und 3 736 295), gegebenenfalls in 5-Stellung substituierte 2-Halogen-1,3-Phenylendiamine (DE-Offenlegungsschriften 2 001 772, 2 025 896 und 2 065 859), 3,3'-Dichlor-4,4'-diamino-diphenylmethan, Toluylendiamin, 4,4'-Diaminodiphenylmethan, 4,4'-Diaminodiphenyldisulfide (DE-Offenlegungsschrift 2 404 976), Diaminodiphenyldithioäther (DE-Offenlegungsschrift 2 509 404), durch Alkylthiogruppen substituierte aromatische Diamine (DE-Offenlegungsschrift 2 638 760), Diaminobenzolphosphonsäureester (DE-Offenlegungsschrift 2 459 491), Sulfonat- oder Carboxylatgruppen enthaltende aromatische Diamine (DE-Offenlegungsschrift 2 720 166) sowie die in der DE-Offenlegungsschrift 2 635 400 aufgeführten hoch-

schmelzenden Diamine genannt. Beispiele für aliphatisch-aromatische Diamine sind die Aminoalkylthioaniline gemäss DE-Offenlegungsschrift 2 734 574.

Beispiele für gegebenenfalls mitzuverwendende organische Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510 beschrieben.

Gegebenenfalls können bei der Herstellung der Formkörper Katalysatoren der an sich bekannten Art verwendet werden, z.B. tertiäre Amine, wie Triethylamin, Tributylamin, N-Methyl-morpholin, N-Ethyl-morpholin, N,N,N',N'-Tetramethylethylendiamin, Pentamethyl-diethylentriamin und höhere Homologe (DE-Offenlegungsschriften 2 624 527 und 2 624 528), 1,4-Diazabicyclo-(2,2,2)-octan, N-Methyl-N'-dimethylaminoäthylpiperazin, Bis-(dimethylaminoalkyl)-piperazine (DE-Offenlegungsschrift 2 636 787), N,N-Dimethylbenzylamin, N,N-Dimethylcyclohexylamin, N,N-Diäthylbenzylamin, Bis-(N,N-diäthylaminoäthyl)-adipat, N,N,N',N'-Tetramethyl-1,3-butandiamin, N,N-Dimethyl-β-phenyläthylamin, 1,2-Dimethylimidazol, 2-Methylimidazol, monocyclische und bicyclische Amidine (DE-Offenlegungsschrift 1 720 633), Bis-(dialkylamino)alkyl-äther (US-Patentschrift 3 330 782, DE-Auslegeschrift 1 30 558, DE-Offenlegungsschriften 1 840 361 und 2 618 280) sowie Amidgruppen (vorzugsweise Formamidgruppen) aufweisende tertiäre Amine gemäss den DE-Offenlegungsschriften 2 523 633 und 2 732 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methyläthylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine als Katalysator sind z.B. Triäthanolamin, Triisopropanolamin, N-Methyl-Diäthanolamin, N-Äthyl-diäthanolamin, N,N-Dimethyl-äthanolamin, deren Umsetzungsprodukte mit Alkylenoxiden wie Propylenoxid und/oder Äthylenoxid sowie sekundär-tertiäre Amine gemäss DE-Offenlegungsschrift 2 732 292.

Als Katalysatoren kommen ferner Silaamine mit Kohlenstoff-Silizium-Bindungen, wie sie z.B. in der DE-Patentschrift 1 229 290 (entsprechend der US-Patentschrift 3 620 984) beschrieben sind, in Frage, z.B. 2,2,4-Trimethyl-2-silamorpholin und 1,3-Diäthylaminomethyl-tetramethyl-disiloxan.

Es können auch organische Metallverbindungen, insbesondere organische Zinnverbindungen, als Katalysatoren verwendet werden. Als organische Zinnverbindungen kommen neben schwefelhaltigen Verbindungen wie Di-n-octyl-zinn-mercaptid (DE-Auslegeschrift 1 769 367; US-Patentschrift 3 645 927) vorzugsweise Zinn(II)-salze von Carbonsäuren wie Zinn(II)-acetat, Zinn(II)-octoat, Zinn(II)-äthylhexoat und Zinn(II)-laurat und die Zinn(IV)-Verbindungen, z.B. Dibutylzinnoxid, Dibutylzinndichlorid, Dibutylzinndiacetat, Dibutylzinndilaurat, Dibutylzinnmaleat oder Dioctylzinndiacetat in Betracht.

Die Katalysatoren werden oft in einer Menge zwischen etwa 0,001 und 1 Gew.-%, bezogen auf Reaktionsgemisch, eingesetzt.

Auch oberflächenaktive Zusatzstoffe, wie Emulgatoren und Schaumstabilisatoren, können mitverwendet werden. Als Emulgatoren kommen z.B. die Natriumsalze von Ricinusölsulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Didecylbenzolsulfonsäure oder Dinaphthylmethandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polyäthersiloxyne, speziell wasserlösliche Vertreter, in Frage. Diese Verbindungen sind im allgemeinen so aufgebaut, dass ein Copolymerisat aus Äthylenoxid und Propylenoxid mit einem Polydimethylsiloxanrest verbunden ist. Derartige Schaumstabilisatoren sind z.B. in den US-Patentschriften 2 834 748, 2 917 480 und 3 629 308 beschrieben. Von besonderem Interesse sind vielfach über Allophanatgruppen verzweigte Polysiloxan-Polyoxyalkylen-Copolymere gemäss DE-Offenlegungsschrift 2 558 523.

Auch Zellregler der an sich bekannten Art wie Paraffine oder Fettalkohole sowie Pigmente oder Farbstoffe und Flammschutzmittel der an sich bekannten Art z.B. Tris-chlorethylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Russ oder Schlämmkreide können mitverwendet werden.

Bevorzugt wird beim erfindungsgemässen Verfahren Wasser sowohl als Kettenverlängerungsmittel als auch als Treibmittel eingesetzt. Neben Wasser können die beispielhaft genannten Kettenverlängerungsmittel jedoch mitverwendet werden. Das Wasser wird im allgemeinen in einer Menge von 0,5 bis 2 Gew.-%, bezogen auf Gesamtgemisch aller anderen Reaktionspartner, vorzugsweise in einer Menge von 0,7 bis 1,2 Gew.-%, eingesetzt. Vorzugsweise gelangt das Wasser in Form einer wässrigen Lösung eines Emulgators der nachstehend beispielshaft genannten Art zum Einsatz. Hierdurch wird eine innige Durchmischung des Wassers mit den übrigen Reaktionsteilnehmern gewährleistet. Vorzugsweise wird bei der Herstellung der Formkörper nach dem bekannten Präpolymerverfahren gearbeitet, d.h. es wird vorzugsweise aus dem höhermolekularen Polyol und dem Diisocyanat in einem NCO/OH-Äquivalentverhältnis von 1,5 : 1 bis 3 : 1, vorzugsweise 1,8 : 1 bis 2,2 : 1 ein Isocyanatgruppen aufweisendes Präpolymer hergestellt, welches anschliessend mit der genannten Wassermenge zum Umsetzung gelangt. Ein Arbeiten nach dem

bekannten «one shot»-Verfahren ist ebenso wie ein Arbeiten unter Mitverwendung der beispielhaft genannten organischen Kettenverlängerungsmittel möglich, jedoch keinesfalls bevorzugt. Im Falle der Mitverwendung derartiger Kettenverlängerungsmittel kommen diese in den bei der Herstellung von Polyurethanelastomeren üblichen Mengen zum Einsatz. Die Herstellung der Polyurethanelastomeren erfolgt im übrigen unter Verwendung solcher Mengen der einzelnen Reaktionspartner, dass eine Isocyanatkennzahl von 100 bis 115 vorliegt. Dies gilt sowohl für die bevorzugte Umsetzung von NCO-Präpolymeren mit Wasser als auch für die Mengenverhältnisse der einzelnen Reaktionspartner beim erfindungsgemäss weniger bevorzugten «one shot»-Verfahren.

Die Menge des in die Form einzutragenden Reaktionsgemischs wird so bemessen, dass das o.g. Raumgewicht von 0,3 bis 0,8 g/cm$^3$ resultiert. Zur Herstellung der Reaktionsgemische und zum Befüllen der Form kann man sich maschineller Einrichtungen bedienen, z.B. solcher, die in der US-Patentschrift 2 764 565 beschrieben werden. Einzelheiten über Verarbeitungseinrichtungen, die auch erfindungsgemäss in Frage kommen, werden im Kunststoff-Handbuch, Band VII, herausgegeben von Vieweg und Höchtlen, Carl-Hanser-Verlag, München 1966, z.B. auf den Seiten 121 bis 205 beschrieben.

Als Formmaterial kommt Metall, z.B. Aluminium, oder Kunststoff, z.B. Epoxidharz, in Frage. In der Form schäumt das schäumfähige Reaktionsgemisch auf und bildet den Formkörper.

Die Herstellung der Haut auf der Oberfläche des Formkörpers kann durch Tauchen bzw. Besprühen des Formteils, vorzugsweise jedoch durch Besprühen der Form selbst, im sogenannten In-mould-coating-Verfahren erfolgen. In Frage kommen Polyurethan-Lacke auf Basis der obengenannten Ausgangsverbindungen, wobei jedoch aus aliphatischen bzw. cycloaliphatischen Verbindungen bestehende Kompositionen bevorzugt sind. Aus ökologischen Gesichtspunkten bzw. Gründen des Umweltschutzes werden wässrige Lösungen oder Dispersionen von Polyurethan bzw. Polyurethan-Harnstoffen bevorzugt, wobei ionische und emulgatorfreie Produkte aus Gründen der Haftung besonders bevorzugt sind.

Erfindungsgemäss bevorzugt ist es zur Oberflächenversiegelung wässrige Lösungen und insbesondere filmbildende wässrige Dispersionen von Polyurethanen oder Polyurethanharnstoffen einzusetzen, wie sie ebenfalls aus der Beschichtungsindustrie an sich bekannt sind.

Die Polyurethandispersionen können anionische, kationische und/oder nichtionogene Dispersionszentren enthalten. Geeignete wässrige Polyurethan-Dispersionen und -Lösungen werden beispielsweise von D. Dieterich et al. in J. Oil Col. Chem. Assoc. 1970, 53, Seiten 363–379, in Die Angewandte Makromolekulare Chemie, 1972, 26, Seiten 85–106, in Angewandte Chemie 1970, 82, Seiten 53–63, in US-PS 4 086 193 (ionische Dispersionen), sowie in den DE-Offenlegungsschriften 2 550 860, 1 495 745 (US-Patent 3 479 310), 1 495 770 (US-Patent 3 535 274), 1 495 847 (Can.-Patent 764 009), 1 770 068 (US-Patent 3 756 992), 2 314 512, 2 141 807, 2 314 513 sowie 2 343 294 (US-PS 3 989 859) beschrieben.

Wässrige Polyurethanlösungen werden darüber hinaus noch in den französischen Patentschriften 2 308 646 und 2 331 581 sowie in DE-OS 2 730 514 beschrieben.

Bevorzugte Polyurethandispersionen sind solche aus Polyhydroxypolyestern, Hexan- und/oder Isophorondiisocyanat und Ethylendiamin-ethylsulfonat der Formel

$$H_2N-CH_2-CH_2-NH-CH_2-CH_2-SO_3Na$$

Erfindungsgemäss ist es häufig bevorzugt, solche wässrige Polyurethandispersionen bzw. -lösungen einzusetzen, welche nachträglich vernetzbar sind. Dies kann z.B. durch Einführung von N-Methylolgruppen (z.B. durch Behandlung mit Formaldehyd) geschehen, welche – vorzugsweise in Gegenwart saurer Katalysatoren – in an sich bekannter Weise unter Ausbildung von Methylengruppen vernetzen.

Die Herstellung der Oberflächenversiegelung der Formkörper erfolgt durch nachträgliches Auftragen der beispielhaft genannten Beschichtungsmittel bzw. Dispersionen auf den vorgefertigten Formkörper oder vorzugsweise durch Beschichten der Innenseite der Form vor der Befüllung der Form mit einem der beispielhaft genannten Beschichtungsmittel bzw. mit einer der beispielhaft genannten Dispersionen. Nach dieser Beschichtung der Forminnenwand wird zunächst die Haut durch Antrocknen der Beschichtung hergestellt. Im allgemeinen kommen die Beschichtungsmittel bzw. Dispersionen in solchen Mengen zum Einsatz, dass eine dichte Haut einer Dicke von 0,05 bis 1 mm, vorzugsweise 0,1 bis 0,5 mm, besonders bevorzugt 0,2 bis 0,3 mm resultiert.

Die erfindungsgemässen, mit einer dichten Aussenhaut versehenen Formkörper eignen sich als Federungselemente, Anschlagpuffer und Dichtungen für Kraftfahrzeuge, insbesondere Automobile.

In Abbildung (1) wird die Konstruktion eines Stossdämpfers unter Verwendung eines erfindungsgemässen, oberflächenversiegelten, in Formen geschäumten Polyurethanelastomers gezeigt, wobei

1) ein Federelement aus geschäumtem, im wesentlichen offenzelligem Polyurethanelastomer,
2) eine Oberflächenversiegelung von 1),
3) die Kolbenstange des Stossdämpfers,
4) eine Stahlspiralfeder,
5) den Stossdämpfer darstellt.

Die folgenden Beispiele erläutern die Herstellung von Federungselementen aus elastomerem, zelligem Polyurethan und deren erfindungsgemässe Beschichtung. Wenn nicht anders vermerkt, sind Mengenangaben als Gewichtsteile bzw. Gewichtsprozente zu verstehen. Die Versuche wurden auf Rührwerksmaschinen, wie sie für die Verarbeitung von flüssigen Polyurethansystemen üblich sind (SK- bzw. EZ-AB-Maschinen der Fa. Hennecke), durchgeführt.

Als Formteil wurden Pufferelemente mit einem Raumgewicht von ca. 500 g/dm³ in entsprechenden Formen, deren Einfüllöffnungen durch einen Deckel über Kniehebel verschlossen wurden, hergestellt. An den beschichteten bzw. unbeschichteten Pufferelementen wurden die Wasseraufnahme nach verschiedenen Verformungsgraden und -zyklen unter Wasser ermittelt. Ausserdem wurde im Druckversuch in Anlehnung an DIN 53 577 das Federungsverhalten gemessen.

Für die Beispiele wurde einheitlich ein Voradduktaus 24 Teilen 1,5-Naphthylendiisocyanat und 100 Teilen eines linearen Ethandiol-Polyadipats (Molekularoewicht 2000) angewandt.

Beispiel 1

a) Vergleichsversuch

Es wurden 215 Teile einer 50%igen wässrigen Lösung eines Fettsäure-Sulfonats mit 124 Teilen des Voradduktes intensiv vermischt und in die 90 °C heisse Form gefüllt. Das nach einer Ausheizzeit von 30 Minuten bei 90 °C erhaltene Formteil zeigt im Druckversuch unter Wasser nach mehreren Verformungen bei Anwendung unterschiedlicher Verformungsgrade eine beträchtliche Wasseraufnahme. Die dabei ermittelten Messwerte sind in den Tabellen 1 und 2 zusammengestellt.

b) Erfindungsgemässes Verfahren

Vor Einfüllung des reaktiven Gemisches aus Vergleichsversuch a) waren die Innenwandungen der 90 °C heissen Form mit einer 40%igen wässrigen PUR-Dispersion mittels einer Sprühpistole besprüht worden, wobei das Wasser augenblicklich verdampfte und ein gleichmässiger elastischer Film (0,2 mm) auf der Formwandung zurückblieb. Dann wurde die reaktive Mischung aus Vergleichsversuch a) in die auf diese Art und Weise präparierte Form gefüllt. Das nach der Entformung erhaltene Formteil hatte auf seiner gesamten Oberfläche den Polyurethan-Film bei guter Haftung angenommen. Bei den entsprechenden Druckversuchen unter Wasser zeigte der Puffer eine erheblich reduzierte Wasseraufnahme bei gegenüber dem Vergleichsversuch unverändertem Federungsverhalten. Die dabei ermittelten Messwerte sind in den Tabellen 1 und 2 zusammengestellt.

Tabelle 1: Ermittlung der Wasseraufnahme nach verschiedenen Verformungsgraden (Verformungsgeschwindigkeit: 50 mm/min)

| Versuch | Verformung (%) | Anzahl Zyklen | Nullgewicht (g) | Wasseraufnahme (g) | Wasseraufnahme (%) |
|---|---|---|---|---|---|
| | 25 | 5 | | 0,777 | 0,51 |
| (b) | 50 | 5 | 152,448 | 1,212 | 0,80 |
| | 67 | 10 | | 4,622 | 3,0 |
| | 25 | 5 | | 2,543 | 1,60 |
| (a) | 50 | 5 | 156,130 | 3,012 | 1,90 |
| | 67 | 10 | | 15,942 | 10,20 |

Tabelle 2: Druckkräfte bei verschiedenen Verformungsgraden (nach jeweils 10 Verformungszyklen)

| | Verformung (%) | Druckkraft N | | Verformung (%) | Druckkraft N |
|---|---|---|---|---|---|
| Pufferelement mit Beschichtung | 25 | 850 | Pufferelement ohne Beschichtung | 25 | 990 |
| | 40 | 1550 | | 40 | 1690 |
| | 50 | 2650 | | 50 | 2700 |
| | 65 | 8230 | | 65 | 8600 |

Prüfbedingungen:
Verformungsgeschwindigkeit: 50 mm/Minute

Die in Beispiel 1b) verwendete wässrige Dispersion war ein Umsetzungsprodukt aus 240 Teilen eines Adipinsäure/Butandiol-Polyesters (Molekulargewicht 2000), 10 Teilen eines Ethoxylierungsproduktes von n-Butanol (Molekulargewicht 1700), 15 Teilen eines Anlagerungsproduktes von Natriumbisulfit an propoxyliertes Butendiol, 5 Teilen Hydrazin und 100 Teilen Diphenylmethandiisocyanat. Die Dispersion war durch Umsetzung mit 0,5 Teilen 30%igem Formalin teilweise methyloliert worden.

Beispiel 2

Beispiel 1b) wurde wiederholt. Jedoch unter Verwendung einer 40%igen wässrigen Dispersion eines Polyurethanharnstoffs aus 300 Teilen eines Adipinsäure/Hexandiol-Polyesters vom Molekulargewicht 800, 90 Teilen Hexamethylendiisocyanat und 15 Teilen der Verbindung

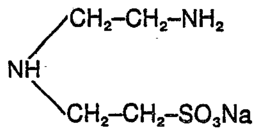

Es wurde wieder ein Formkörper mit dichter Aussenhaut erhalten, welcher im Druckversuch unter Wasser eine ähnliche Wasseraufnahme zeigte wie der versiegelte Formkörper von Beispiel 1b).

**Patentansprüche**

1. Formkörper aus einem zumindest teilweise offenzelligen Polyurethanelastomeren mit einer Oberflächenhaut, dadurch gekennzeichnet, dass sie auf der Basis höhermolekularer, 2 bis 3 Hydroxylgruppen aufweisender Verbindungen vom Molekulargewicht 800–4000, 1,5-Naphthylendiisocyanat und Wasser, in einer Isocyanatkennzahl von 100 bis 115, mit einem weitgehend homogenen Dichteprofil und einem Raumgewicht von 0,3 bis 0,8 g/cm³ und einer dichten, nichtporösen Haut, aus ionischem, emulgatorfreiem Polyurethan oder Polyurethanharnstoff mit einer Dicke von 0,05 bis 1 mm als Versiegelung bestehen.

2. Verfahren zur Herstellung von an der Oberfläche versiegelten Formkörpern nach Anspruch 1, dadurch gekennzeichnet, dass man den Formkörper durch Tauchen oder Besprühen mit einer wässrigen, ionischen, emulgatorfreien Polyurethanlösung oder -dispersion unter anschliessender Trocknung mit einer dichten Haut versieht.

3. Verfahren zur Herstellung von Formkörpern nach Anspruch 1, dadurch gekennzeichnet, dass man die Innenseite einer verschliessbaren Form durch Besprühen mit einer wässrigen ionischen, emulgatorfreien Polyurethanlösung oder -dispersion beschichtet und die so erhaltene Beschichtung zu einer dichten Haut trocknen lässt und anschliessend in der so vorbehandelten Form den Formkörper mit einem weitgehend homogenen Dichteprofil und einem Raumgewicht von 0,3 bis 0,8 g/cm³ herstellt, indem man in die Form ein Reaktionsgemisch aus

(i) höhermolekularen, 2–3 Hydroxylgruppen aufweisenden Verbindungen mit einem Molekulargewicht von 800 bis 4000 und 1,5-Naphthylendiisocyanat oder aus diesen Komponenten hergestellten NCO-Prepolymeren,
(ii) Wasser und gegebenenfalls
(iii) organischen Kettenverlängerungsmitteln, sowie gegebenenfalls weiteren in der Polyurethanchemie an sich bekannten Hilfs- und Zusatzmitteln einfüllt, wobei man die Mengenverhältnisse der Reaktionspartner so wählt, dass eine Isocyanat-Kennzahl von 100 bis 115 vorliegt, und wobei man die Gesamtmenge des in die Form eingefüllten Reaktionsgemischs so wählt, dass ein Raumgewicht des Formkörpers von 0,3 bis 0,8 g/cm³ resultiert und anschliessend nach Schliessen der Form das Reaktionsgemisch im Temperaturbereich von 60 bis 110 °C ausreagieren lässt.

4. Verwendung der Formkörper nach Anspruch 1) als Federungselemente, Anschlagpuffer und Dichtungen für Kraftfahrzeuge.

**Claims**

1. Mouldings of an at least partly open-cell polyurethane elastomer having a surface skin, characterised in that they are based on relatively high molecular weight compounds containing 2 to 3 hydroxyl groups and having a molecular weight of 800–4,000, 1,5-naphthylene diisocyanate and water, the isocyanate index being 100 to 115, have a substantially homogeneous density profile and a bulk density of 0.3 to 0.8 g/cm³ and a tight, nonporous skin of an ionic, emulsifier-free polyurethane or polyurethane urea, having a thickness of 0.05 to 1 mm and forming a seal.

2. Process for producing surface-sealed mouldings according to Claim 1, characterised in that the moulding is provided with a tight skin by dip-coating or spray-coating with an aqueous, ionic, emulsifier-free polyurethane solution or dispersion, followed by drying.

3. Process for the production of mouldings according to Claim 1, characterised in that the inside of a closeable mould is spray-coated with an aqueous, ionic, emulsifier-free polyurethane solution or dispersion and the coating thus obtained is allowed to dry to form a tight skin and then the moulding having a substantially homogeneous density profile and a bulk density of 0.3 to 0.8 g/cm³ is produced in the mould thus pretreated by introducing into the mould a reaction mixture of

(i) relatively high molecular weight compounds having 2-3 hydroxyl groups and a molecular weight of 800 to 4,000 and 1,5-naphthylene diisocyanate or NCO prepolymers produced from these components,
(ii) water and optionally
(iii) organic chain-extending agents, and optionally other auxiliaries and additives known per se in polyurethane chemistry, the quantitative ratios between the reactants being selected such that an isocyanate index of 100 to 115 is present and the total quantity of the reaction mixture introduced into the mould being selected such that the resulting moulding has a bulk density of 0.3 to 0.8 g/cm³ and then, after closing the mould the reaction mixture is allowed to react completely at a temperature in the range of 60 to 110 °C.

4. Use of the mouldings according to Claim 1) as

cushioning elements, shock-absorbing buffers and sealing elements for motor vehicles.

**Revendications**

1. Pièces moulées en un élastomère de polyuréthanne au moins en partie à cellules ouvertes, munies d'une peau de surface, caractérisées en ce qu'elles sont constituées à base de composés de haut poids moléculaire, d'un poids moléculaire de 800–4000, présentant 2 à 3 groupes hydroxyles, de 1,5-naphtylènediisocyanate et d'eau, à un indice d'isocyanate de 100 à 115, ayant un profil de densité totalement homogène et un poids volumique de 0,3 à 0,8 g/cm³ et consistent en une peau non poreuse en polyuréthanne ou polyuréthanneurée ionique sans émulsionnant, d'une épaisseur de 0,05 à 1 mm, comme scellement.

2. Procédé pour la fabrication de pièces moulées scellées en surface selon la revendication 1, caractérisé en ce que l'on munit les pièces moulées d'une peau dense par immersion ou pulvérisation avec une solution ou dispersion aqueuse de polyuréthanne ionique sans émulsionnant suivie de séchage.

3. Procédé pour la fabrication de pièces moulées selon la revendication 1, caractérisé en ce que l'on enduit la surface intérieure d'un moule verrouillable par pulvérisation avec une solution ou dispersion de polyuréthanne ionique sans émulsionnant et on fait sécher le revêtement ainsi obtenu en une peau dense et on fabrique ensuite dans le moule ainsi prétraité les pièces moulées ayant un profil de densité totalement homogène et un poids volumique de 0,3 à 0,8 g/cm³, en remplissant le moule avec un mélange de réaction consistant en

i) des composés de poids moléculaire élevé, présentant 2 à 3 groupes hydroxyles, ayant un poids moléculaire de 800 à 4000 et du 1,5-naphtylènediisocyanate, ou des prépolymères à NCO fabriqués à partir de ces composants,

(ii) de l'eau et éventuellement,

(iii) des agents d'allongement de chaînes organiques, et éventuellement d'autres agents auxiliaires et additifs connus dans la chimie des polyuréthannes, les proportions des partenaires de réaction étant choisies de telle sorte qu'il y ait un indice d'isocyanate de 100 à 115, et la quantité totale du mélange de réaction introduit dans le moule étant choisie de telle sorte qu'il en résulte un poids volumique de la pièce moulée de 0,3 à 0,8 g/cm³, et en faisant ensuite réagir le mélange de réaction après fermeture du moule dans un intervalle de températures de 60 à 110 °C.

4. Utilisation des pièces moulées selon la revendication 1 comme éléments d'amortissement, butées de rebord de suspension et joints pour véhicules automobiles.

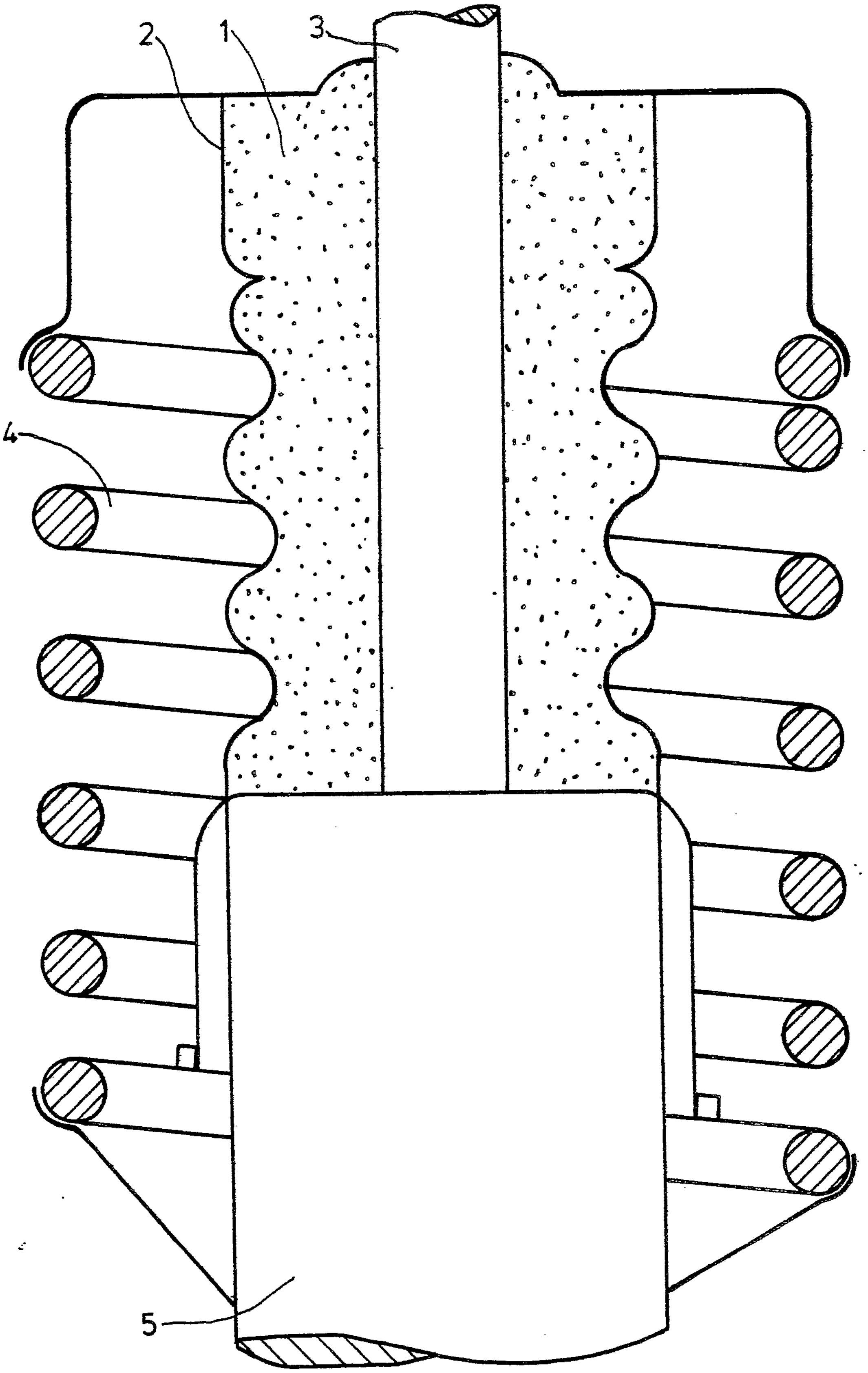
2
1
3
4
5